# EUROPEAN PATENT SPECIFICATION

(11) **EP 2 242 376 B1**
(45) Date of publication and mention of the grant of the patent: **04.06.2014**
(21) Application number: 08876080.6
(22) Date of filing: 27.10.2008
(51) Int. Cl.: A23G 9/04, A23G 9/12, A23G 9/22, A23G 9/28

(54) **METHOD FOR PRODUCING AND EXTEMPORANEOUSLY SELLING FOOD SUBSTANCES AND EXPOSING AND SELLING EQUIPMENT ACCORDING SAID METHOD**
VERFAHREN FÜR DIE HERSTELLUNG UND DEN FRISCHVERKAUF VON NAHRUNGSMITTELPRODUKTEN SOWIE AUSSTELLUNGS- UND VERKAUFSAUSSTATTUNG FÜR DIESES VERFAHREN
PROCEDE DE PRODUCTION ET DE VENTE EXTEMPORANEE DE SUBSTANCES ALIMENTAIRES ET EQUIPEMENT D EXPOSITION ET DE VENTE SELON LEDIT PROCEDE

(43) Date of publication of application: 27.10.2010
(73) Proprietor: Ali S.p.A.-Carpigiani, 40011 Anzola Emilia (BO) (IT)
(72) Inventor: GROTTI, Renzo, I-40013 Castelmaggiore (BO) (IT)
(74) Representative: Marietti, Andrea
(86) International application number: PCT/IT2008/000667
(87) International publication number: WO 2010/049956

(56) References cited:
- WO-A-02/23104
- GB-A- 1 426 961
- US-A- 4 736 600
- US-A1- 2008 092 580
- Anonymous: "Gelato & Gelaterie", , 19 August 2007 (2007-08-19), Retrieved from the Internet: URL:http://replay.web.archive.org/20070819 071454/http://www.gelateria.com/page350 [retrieved on 2011-04-27]

## Description

### FIELD OF THE INVENTION

The invention refers to a novel methodology for producing and extemporaneously retailing foodstuffs requiring, for their production, a thermal treatment and a contemporaneous mixing or stirring action.

A typical and preferred example of such foodstuffs is the so-called Italian ice cream or similar products, such as for example crushed ice drinks, but substances obtainable from heating too, as various edible cream kinds.

The invention concerns also an equipment for producing and extemporaneously retailing the afore said foodstuffs.

Throughout the present specification reference to the Italian ice cream will be made, but it is to be understood that such a definition or better the term "Italian ice cream or similar", will designate also other foodstuffs to which the invention could be applied and, as mentioned, that are obtained from thermal treatment and contemporaneous mixing or stirring operations.

### DESCRIPTION OF THE KNOWN ART

Ice cream is actually produced and sold with two different technologies and procedures, and comprises the so-called soft ice cream and the so-called Italian ice cream.

The soft ice cream is produced in appropriate machines providing its continuous production and driven dispensing, often automatically, of a mixture of ice cream and air.

The Italian ice cream, having organoleptic characteristics completely different from the former one, is homemade, usually in laboratories adjoining an extemporaneously retail shop, wherein a refrigerated display counter exhibits to consumers a plurality of tubs, each comprising some amount of ice cream with a determined flavor.

The production happens, as afore said, in a laboratory adjoined to the retail shop, where one or more production machines are located, particularly one or more batch freezers and eventually one or more pasteurizers or cooking machines.

The pasteurized mixture to be batch frozen is introduced into a batch cylinder provided with cooling means for its walls, and eventually the bottom, and with stirring blades treating the cooled liquid mixture until the desired pasty consistency is reached. At this point the ice cream is drained from the batch freezer and maintained in a cool environment, more often transferred in one or more exposing tubs intended to be placed over the selling counter or preserved in a cooled environment awaiting to be exposed for selling. The batch freezer is then washed to be ready for treating a following mixture, generally having a different flavour from the former one.

This procedure involves several drawbacks already present today. First of all the ice cream handling from the batch freezer to the tubs and, with these, into the cooler or the refrigerated display counter, causes a hard engagement for the operator carrying it out, and further presents hygiene problems and deteriorations of the organoleptic characteristics, because the ice cream is exposed to the environment for a more or less long period, with a consequent alteration of its characteristics, obviously starting from the surface.

Secondly, the necessary equipments are numerous and bulky, whereby in any case the complex laboratory - retail shop must occupy a predetermined minimum surface.

The Parados S.r.l. commercialises machines for producing ice cream, which is advertised on web site: http://www.gelateria.com/page304. Machine Gel 9 is a small equipment for producing ice cream in a small quantity (2 l) and it has one cylinder for the production of one flavour of ice cream. Said cylinder has a transparent and removable cover. The prepared ice cream is removed from the cylinder through a frontal opening provided on the machine Gel 9 and it is transferred into a recipient for exposing and selling. Further apparatuses of Parados S.r.l. are Machines Gel 5 and Gel 10, which are similarly small equipments for producing one ice cream flavour. Machine Gel 5, shown on the left of the Photo on page 2, has one cylinder of 1 I , while machine Gel 10, shown on the right of the Photo on page 2, has one cylinder of 2 l. Said cylinders have a transparent and removable lid, through which the produced ice cream flavour is transferred into small recipients for its exposure for selling.

Another Parados S.r.l. apparatus, called as COMBI 3 includes two cylinders, one of them is provided for mixing and heating one flavour, while the other cylinder is used for cooling and freezing the flavour. COMBI 3 is a combined machine to pasteurise and freezing at a very competitive price.

EP-A-0996341 discloses an apparatus for making simultaneously many single batch portions of ice cream which are not intended for storage but for immediate dispensing and consumption. The apparatus comprises a refrigerated counter table, wherein ice-cream making containers are inserted. In each container an individual portion of upto 250 ml ice cream mix can be accomodated. Said ice cream is mixed with a rotating shaft having fixed scraper blades. The counter table contains refrigerating means for refrigerating said rotating containers. The refrigerating means consist of a glycol-water mixture through which a refrigerant is circulated by means of tubing inside the table. In operation, the ice cream is prepared conventionally in a separate apparatus and the mix is then dispensed into the refrigerated miniature ice cream container for preparing a single, portion (100-250 ml). Successively, according to the customer's request, flavour extract, fruits, nuts, chocolate, etc. are added to said single portions from cooled trays incorporated into said counter table.

### OBJECT OF THE INVENTION

Object of the present invention is now to remedy these and other drawbacks and disadvantages of the known procedure and art, realizing among other things a number of means allowing to produce and directly sell the Italian ice cream or the afore said foodstuffs, without the substance being carried and handled before its withdrawal for selling, and further without it would be exposed in tubs for selling. Other objects of the invention are to provide a procedure and an equipment for producing and selling the Italian ice cream or similar substances allowing to reduce the totally occupied space for such a functions and allowing the consumer not only to verify the appearance of the substance for sale, but also to watch the producing operations of the substance itself and eventually to visually control the various production steps.

For realizing these and other objects, the present invention concerns a new method for producing and selling the Italian ice cream or similar substances, as generally defined in claim 1, as well as a new equipment, especially designed for actuating the mentioned method, as more generically defined in claim 4.

### DESCRIPTION OF THE FIGURES

These and other peculiarities and characteristics of the invention will be evident from the subsequent description of a preferred embodiment of an equipment for producing and selling Italian ice cream, herein illustrated in the drawings in attachment, wherein:
Figure 1 is a perspective view of an equipment for producing and selling Italian ice cream according to the invention, in the shape of a display counter.
Figure 2 is a perspective view of a module with four batch freezers belonging to the display counter of figure 1.
Figure 3 is an elevation view of the module of figure 2.
Figures 4 and 5 are perspective views illustrating the stirring drive means of one of the batch freezers, in a disassembled and assembled condition respectively.
Figure 6 is a scheme of a particular and preferred circuit for controlled cooling or heating of a batch cylinder.
Figure 7 is an elevation view of a batch cylinder realized for carrying out the controlled cooling or heating procedures according to the figure 6 scheme.

### DESCRIPTION OF THE PREFERRED EMBODIMENTS

According to what hereinbefore exposed and claimed, the invention concerns a method for producing and extemporaneously retailing Italian ice cream and other foodstuffs, with several flavors, allowing to eliminate the drawbacks and the disadvantages afore mentioned, essentially producing single ice cream flavors, or similar, in at least as much treatment units or batch freezing units, preserving then the ice cream or similar in the same producing cylinders and taking it out directly from the same cylinders as a consequence of the consumer requests.

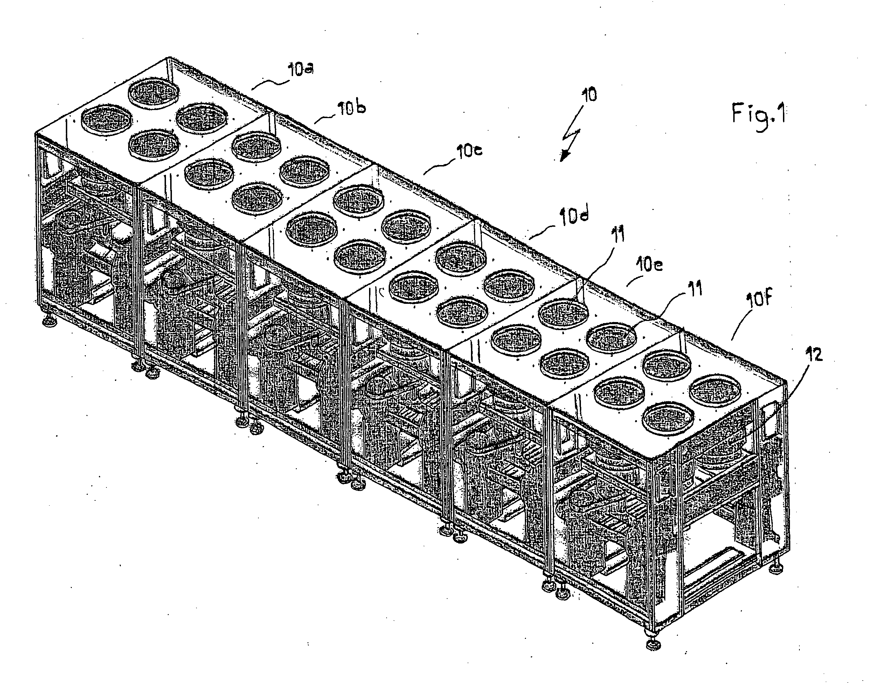

To realize such a method, the invention provides an equipment for producing, exposing and extemporaneously retailing the ice cream, or similar, of the type shown in the attached figures and more generally in figure 1.

In such a figure an equipment is illustrated having a shape of a selling counter 10 composed of a plurality of similar modules 10a, 10b 10c, 10d, 10e, 10f, and in reciprocal abutment so that to present to the buyer a predetermined amount of flavours, for example visible to the buyer through transparent lids 11 apposed to each vertical cylinder 12 for producing and preserving the ice cream or similar.

In this way the foregoing objects of the present invention are realized, particularly obtaining and preserving better organoleptic product characteristics, reducing the work engagement of the operator / operators and further reducing the spaces required by the necessary equipments for a homemade shop for producing and selling ice cream or similar, practically to the spaces occupied by the counter 10.

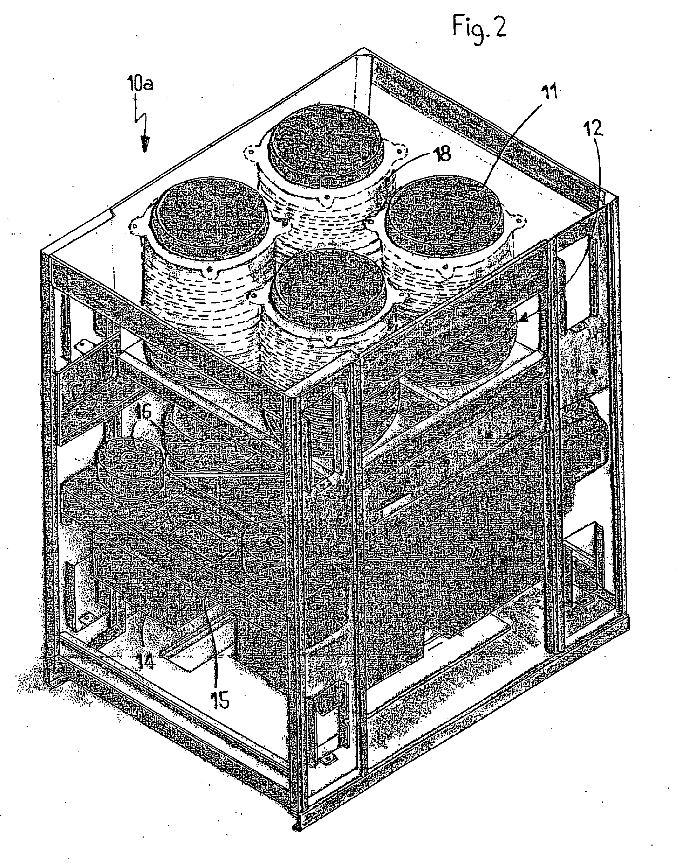

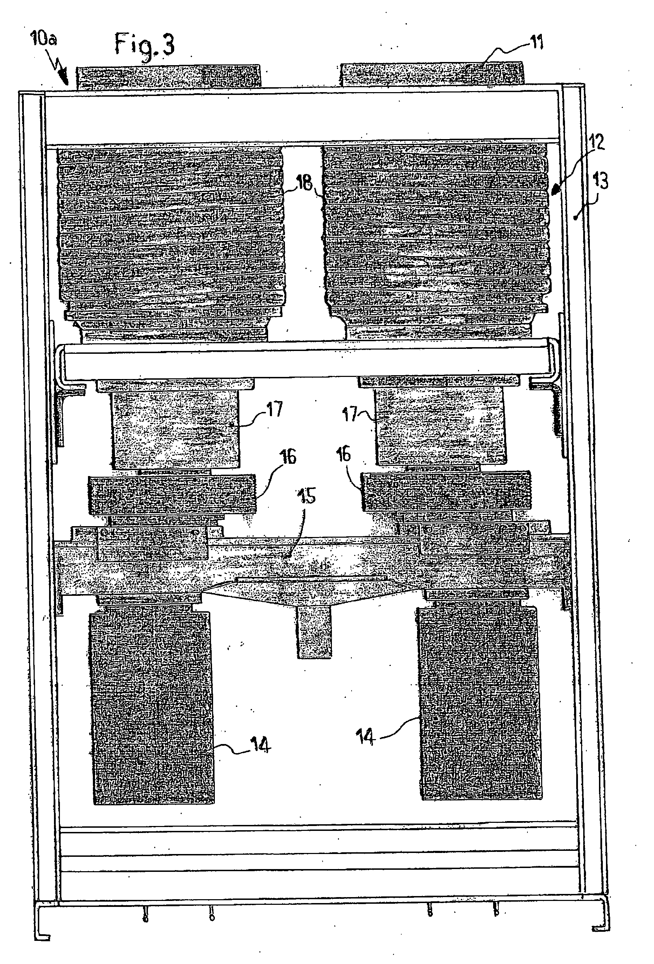

Referring to figures 2 and 3, every module, for example 10a, presents a supporting frame 13 adapted to sustain and exhibit for example four vertical producing cylinders 12, particularly for batch freezing and preserving the ice cream, each one having a batch freezing stirrer driven by a motor 14 supported by a crossbeam 15.

Every motor 14 drives, by pulleys 16, a corresponding drive shaft (not visible in figures 2 and 3), supported by the bearings housed in the casing 17. The drive shaft is rotating in a cylindrical receptacle 12 having a preferably transparent lid 11 and driving the rotation of the batch stirring or mixing known blades.

The outer wall of each cylinder 12 is wound by a coil 18 directly or indirectly generating and / or maintaining the requested temperature for producing and / or conserving ice cream. The coil 18 is in turn connected to an appropriately dimensioned freezing unit provided with air or water compressor and condenser. The unit may be assigned to serve a specific module 10a, or preferably the whole counter 10. The temperatures in the cylinder 12 may be adjusted particularly to have different values when the cylinder is intended for producing ice cream, or when the same operates a preservation of the produced ice cream only, otherwise still when different temperatures are requested, eventually higher than the environment one.

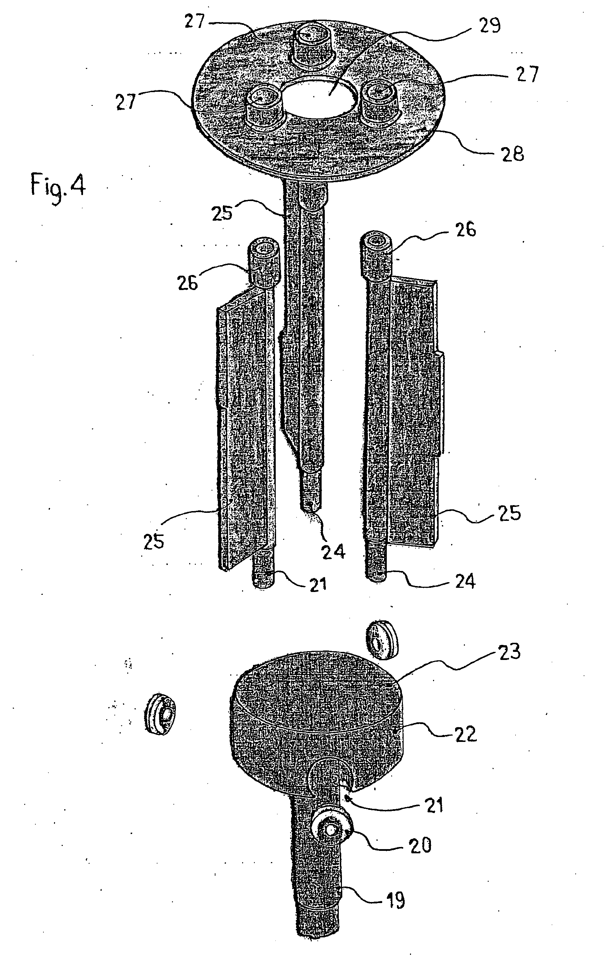

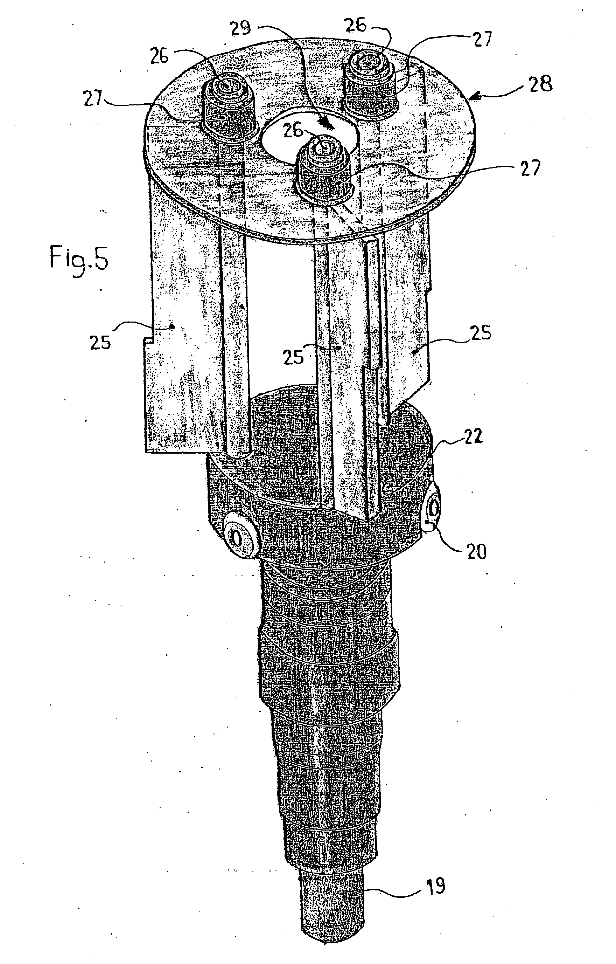

In figures 4 and 5 is illustrated an embodiment of batch freezing means, essentially composed of a shaft 19 rotated by a corresponding motor 14 and rotating in abutment over the bearings 20 inserted in seats 21 of a flange 22 integral with the shaft 19. Further on its upper face the flange 22 presents seats 23 for housing cylindrical endings 24 of the batch freezing blades 25.

In the upper portion the blades 25 exhibit a further cylindrical ending 26 adapted for housing into seats 27 of a covering element 28, that is preferably transparent. The covering element 28 exhibits a further central opening 29 to introduce the components for the mixture to be prepared. The whole is then covered by a preferably transparent lid 11 with safety sensors (not illustrated), adapted to interrupt stirring when the lid 11 is raised.

To serve the produced ice cream, the blades 25 may be eventually drawn out, with the covering element 28 too, for a better access to the containing cylinder.

It has to be noticed that in case of ice creams requesting a preventive pasteurization or cooking operation, such an operation may be conducted separately or in the same batch cylinders 12, conveniently by adjusting the operating procedures, particularly the temperature, for example in the way herein after explained. The same operations can be carried out in case of heating and stirring edible creams.

It has been noticed that a batch cylinder capacity comprised from 4 to 10 liters allows to better carry out the objects of the invention. However, it has to specified that the invention is not to be considered limited to these values, because it is possible to have cylinders with a lower or greater capacity than the suggested ones.

Further, it is possible to throttle the refrigeration of every cylinder or of some cylinders, because of cost savings, when the product is in the preserving step in a reduced amount.

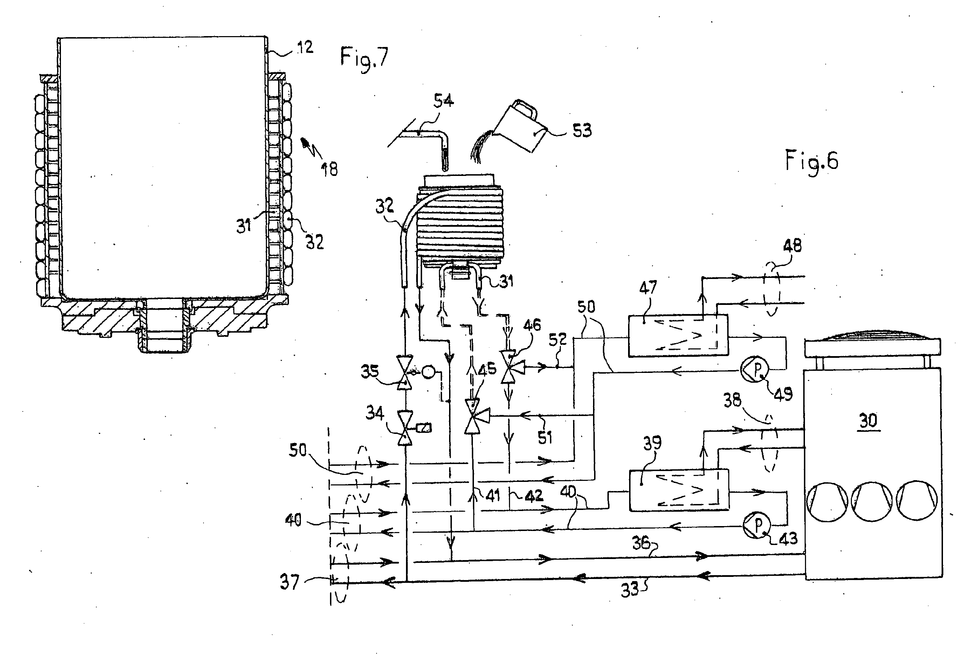

Figures 6 and 7 respectively show a particularly preferred thermic controlling circuit for a batch cylinder 12 and the treating coil structure at the outer wall of such a cylinder 12.

Referring first to figure 6, a refrigerant unit 30, with a water or air condensation, of an itself known type, preferably operates for every batch cylinder 12 of the counter 10. Every batch cylinder 12 has its own outer side wall wound by a coil 18 that, in this particular case, as illustrated in figure 7, is actually formed by two overlying coils, of which the inner one 31 operates for the glycol circulation, whereas the outer one 32 circulate the cooling gas coming directly from the unit 30.

Referring again to figure 6, the refrigerant unit 30 feeds with a cooled gas a cooling circuit of the coil 32, provided with an intake trunk 33, with a shut - off valve 34 and an expansion valve 34', as well as a returning trunk 35. The coil 32 is able then to cool, crossing the coil 31, the inner of the cylinder 12 to the requested temperature to carry out the batch freezing.

Once the batch freezing is finished, the ice cream obtained must be conserved at a temperature lower than the environment temperature, but strongly higher than the batch freezing temperature. To obtain this, the cooled gas outgoing from the refrigerant unit 30 is sent, through a separated circuit 36, to an heat exchanger 37 where glycol is cooled and then sent to the coil 31 through a circuit 38, provided with a shut - off valve 39 and fed by a pump 40.

The described circuit operation is as follows. During the batch freezing step in the concerned cylinder 12, the valve 39 is closed and the glycol pump 40 is stopped, whereas the valve 34 is opened to allow the cooling gas to circulate in the coil 32 and obtain the freezing desired temperature for the mixture in the cylinder 12. At the end, the valve 34 is closed, whereas the valve 39 is opened and the pump 40 is operated, to circulate the glycol in the coil 31 and thereby to maintain the ice cream at the preserving desired temperature.

In case wherein pasteurization or cooking in the cylinder 12 are desired, or further a thermic cream treatment at a higher temperature than the environment one, a third circuit (not illustrated), provided with an opening or closing valve too and with temperature regulating means, may connect the hot gas exiting from the refrigerant unit with the coil 32 or with the heat exchanger 37 and then with the coil 31, thereby realizing an high temperature appropriate thermic treatment.

As an alternative to low temperature cooling during the batch freezing, it is possible, by removing the circuit 33 - 35, to enter into the cylinder 12 an appropriate and controlled amount of liquid nitrogen, both manually (as exemplified in 41), and preferably by a duct 42, directly into the stirring mixture.

## Claims

1. A method for producing and extemporaneously retailing foodstuffs subjected to thermal treatment and mixing or stirring, particularly Italian ice cream or similar, having several flavours visibly exposed to customer, **characterized by**:
a) producing several flavours of such foodstuffs, particularly of ice cream or similar in at least as many treatment units (10a-10f), each one having a stirring and batch vertical cylinder (12) fitted with vertical stirring means (25) and thermal treatment means (18);
b) preserving the obtained product in the corresponding stirring and batch cylinders (12) at a temperature different than that of the batch freezing temperature;
c) taking out the single flavours according to the customer's request directly from the inlet at the upper level of said vertical stirring and batch cylinders (12).

2. A method according to claim 1, **characterized by** preventive pasteurizing or cooking the mixture / mixtures, in the same stirring and batch cylinders (12).

3. A method according to claim 1 or 2, **characterized by** modifying the cooling and / or stirring conditions to throttle the production.

4. An equipment for producing, exposing and retailing foodstuffs subjected to thermal treatment and mixing or stirring, particularly Italian ice cream or similar, having several single flavours, **characterized in that** it is composed of a plurality of stirring and batch vertical cylinders (12), each one provided with thermal treatment means (18) and vertical stirring means (25), said cylinders (12) being adapted to preserve product therein obtained at a temperature different than that of the batch freezing temperature and being available to an operator for taking out single product measures, each stirring and batch vertical cylinder (12) has an inlet substantially at the upper level of the exposing equipment for introducing into the cylinder and taking out the product.

5. An equipment according to claim 4, **characterized in that** each stirring and batch cylinder (12) involves stirring means (25) activable and deactivable by control, as well as cooling means controllable to provide at least two temperatures, respectively for product thermal treatment and for preserving the product..

6. An equipment according to claim 4 or 5, **characterized in that** said stirring means (25) are composed of batching blades (25) or similar releasably mounted into the corresponding cylinder (12).

7. An equipment according to claim 4, 5 or 6, **characterized in that** at least a batch cylinder portion involves means to carry out in the same cylinders a preventive pasteurization or cooking.

8. An equipment according to claim 1, **characterized in that** every stirring and batch cylinder (12) has a removable lid (11).

9. An equipment according to one or more of the claims 4 - 8, **characterized by** being composed of two or more modules (10a-10f), each presenting one or more stirring and batch cylinders (12) having in common at least part of the thermal treatment means (18) and / or at least part of the stirrer driving means (14, 16).

10. An equipment according to at least one of the claims 4 - 9, **characterized in that** each stirring and batch cylinder (12) has a capacity from 4 to 10 liters.

11. An equipment according to at least one of the preceding claims, **characterized in that** each stirring and batch cylinder (12) has separated thermal treatment means (18), respectively intended for providing temperatures more distant or closer to room temperature.

12. An equipment according to claim 11, **characterized in that** the thermal treatment means (18) intended for providing more distant temperatures relative to the room temperature are composed of a coil (18) which is connectable under control to a refrigerant unit (30).

13. An equipment according to claim 12, **characterized in that** said refrigerant unit (30) is adapted to provide an appropriate temperature to the coil or coils (18) for batch freezing the ice cream or similar.

14. An equipment according to claim 12, **characterized in that** said refrigerant unit (30) is adapted to provide an appropriate temperature to the coil or coils (18) for pasteurizing or cooking the mixture in the stirring and batch cylinder (12).

15. An equipment according to claim 12, **characterized in that** said refrigerant unit (30) is adapted to provide an appropriate temperature to the coil or coils (18) for thermal treatment of edible creams.

16. An equipment according to claim 11, **characterized in that** said thermal treatment means (18) intended for providing temperatures closer to the room temperature are in the form of at least one coil (31) wherein glycol is circulated under control, the latter being cooled or heated in at least one heat exchanger.

17. An equipment according to claim 16, **characterized in that** said glycol heat exchanger is connected to the afore said refrigerant unit (30).

18. An equipment according to claim 16 or 17, **characterized in that** said glycol circuit is adapted to provide an appropriate temperature to the coil or coils (31) for preserving the ice cream or similar.

19. An equipment according to claim 16 or 17, **characterized in that** said glycol circuit is adapted to provide an appropriate temperature to the coil or coils (31) for pasteurizing or cooking the mixture in the stirring and batch cylinder (12).

20. An equipment according to claim 16 or 17, **characterized in that** said glycol circuit is adapted to provide an appropriate temperature to the coil or coils (31) for thermal treatment of edible creams.

21. An equipment according to claim 11, **characterized in that** the thermal treatment means (18) intended for providing more distant temperature from the room temperature are composed of means for controlled inletting liquid nitrogen, or other liquid inert gas, directly into the mixture under treatment.

## Patentansprüche

1. Ein Verfahren zur Herstellung und für den ungeregelten Verkauf von Nahrungsmitteln, die einer thermischen Behandlung und Mischen oder Rühren unterworfen werden, insbesondere von italienischer Eiscreme oder Ähnlichem, in unterschiedlichen Geschmacksrichtungen, die dem Kunden gegenüber sichtbar ausgestellt werden, **gekennzeichnet durch**:
a) die Herstellung von unterschiedlichen Geschmacksrichtungen von solchen Nahrungsmitteln, insbesondere von Eiscreme oder Ähnlichem in mindestens entsprechend vielen Behandlungseinheiten (10a-10f), wobei jede Einheit einen vertikal ausgerichteten Schlag- und Rührzylinder (12) aufweist, der mit vertikal angeordneten Rührmittein (25) und Mitteln zur thermischen Behandlung (18) ausgestattet ist;
b) das Aufbewahren des erhaltenem Produktes in dem entsprechendem Schlag- und Rührzylinder (12) bei einer Temperatur, die verschieden von der Gefriertemperatur der Charge ist;
c) das Herausnehmen der einzelnen Geschmacksrichtungen, gemäß dem Kundenwunsch direkt aus der Einlassöffnung an der oberen Ebene der vertikal ausgerichteten Schlag- und Rührzylinder (12).

2. Ein Verfahren gemäß Anspruch 1, **gekennzeichnet durch** vorbeugende Pasteurisierung oder vorbeugendes Kochen der Mischung/Mischungen in dem gleichen Schlag- und Rührzylinder (12).

3. Ein Verfahren gemäß Anspruch 1 oder 2, **gekennzeichnet durch** Anpassen der Kühl- und/oder Rührbedingungen, um die Produktion zu drosseln.

4. Eine Vorrichtung zur Herstellung, Ausstellung und zum Verkauf von Nahrungsmitteln, die einer thermischen Behandlung und Mischen oder Rühren unterworfen werden, insbesondere von italienischer Eiscreme oder Ähnlichem, in unterschiedlichen Geschmacksrichtungen, **dadurch gekennzeichnet, dass** diese aus einer Vielzahl von vertikal angeordneten Schlag- und Rührzylindern (12) aufgebaut ist, wobei jeder mit Mitteln (18) zur thermischen Behandlung und vertikal angeordneten Rührmitteln (25) ausgestattet ist, wobei die Zylinder (12) so angepasst sind, um darin das erhaltene Produkt bei einer Temperatur aufzubewahren, die verschieden ist von der Gefriertemperatur der Charge und für eine Bedienperson erreichbar ist, um einzelne Produktportionen zu entnehmen, wobei jeder vertikal angeordnete Schlag- und Rührzylinder (12) eine Einlassöffnung aufweist, die sich im Wesentlichen an der oberen Ebene der Ausstelleinrichtung befindet und zum Einfüllen des Produktes in den Zylinder oder zur Entnahme des Produktes aus dem Zylinder dient.

5. Eine Vorrichtung gemäß Anspruch 4, **dadurch gekennzeichnet, dass** jeder Schlag- und Rührzylinder (12) Rührmittel (25) beinhaltet, die über eine Steuerung aktivierbar und deaktivierbar sind, sowohl als auch steuerbare Kühlmittel, um mindestens zwei Temperaturen bereitzustellen, entsprechend für die thermische Behandlung des Produktes und für die Aufbewahrung des Produktes.

6. Eine Vorrichtung gemäß Anspruch 4 oder 5, **dadurch gekennzeichnet, dass** die Rührmittel (25) aus Rührblättern (25) oder Ähnlichem bestehen, die lösbar innerhalb des entsprechenden Zylinders (12) befestigt werden.

7. Eine Vorrichtung gemäß Anspruch 4, 5 oder 6, **dadurch gekennzeichnet, dass** zumindest ein Bereich des Rührzylinders Mittel beinhaltet, um in den gleichen Zylindern eine vorbeugende Pasteurisierung oder ein vorbeugendes Kochen durchführen zu können.

8. Eine Vorrichtung gemäß Anspruch 1, **dadurch gekennzeichnet, dass** jeder Schlag- und Rührzylinder (12) einen abnehmbaren Deckel (11) aufweist.

9. Eine Vorrichtung gemäß einem oder mehreren der Ansprüche 4 bis 8, **dadurch gekennzeichnet, dass** diese aus zwei oder mehreren Modulen (10a-10f) aufgebaut ist, wobei jedes einen oder mehrere Schlag- und Rührzylinder (12) aufweist, die mindestens einen Teil der Mittel zur thermischen Behandlung (18) und/oder mindestens einen Teil des Rührantriebs (14, 16) gemeinsam haben.

10. Eine Vorrichtung gemäß mindestens einem der Ansprüche 4 bis 9, **dadurch gekennzeichnet, dass** jeder Schlag- und Rührzylinder (12) eine Kapazität von 4 bis 10 Litern aufweist.

11. Eine Vorrichtung gemäß mindestens einem der vorhergehenden Ansprüche, **dadurch gekennzeichnet, dass** jeder Schlag- und Rührzylinder (12) separate Mittel (18) zur thermischen Behandlung aufweist, die entsprechend zur Bereitstellung von Temperaturen dienen, die mehr oder weniger nah an die Raumtemperatur heranreichen.

12. Eine Vorrichtung gemäß Anspruch 11, **dadurch gekennzeichnet, dass** die Mittel (18) zur thermischen Behandlung, die für die Bereitstellung von Temperaturen gedacht sind, die stärker von der Raumtemperatur abweichen, aus einer Windung (18) bestehen, die steuerbar mit einer Gefriereinheit (30) verbunden werden kann.

13. Eine Vorrichtung gemäß Anspruch 12, **dadurch gekennzeichnet, dass** die Kühleinheit (30) so angepasst ist, um eine geeignete Temperatur an die Windung oder die Windungen (18) zum Gefrieren der Charge von Eiscreme oder Ähnlichem zu liefern.

14. Eine Vorrichtung gemäß Anspruch 12, **dadurch gekennzeichnet, dass** die Gefriereinheit (30) so angepasst ist, um eine geeignete Temperatur an die Windung oder die Windungen (18) zum Pasteurisieren oder Kochen der in dem Schlag- und Rührzylinder (12) befindlichen Mischung zu liefern.

15. Eine Vorrichtung gemäß Anspruch 12, **dadurch gekennzeichnet, dass** die Gefriereinheit (30) so angepasst ist, um eine geeignete Temperatur an die Windung oder die Windungen (18) zur thermischen Behandlung von essbarer Sahne zu liefern.

16. Eine Vorrichtung gemäß Anspruch 11, **dadurch gekennzeichnet, dass** die Mittel (18) zur thermischen Behandlung, die für die Bereitstellung von Temperaturen gedacht sind, die näher an der Raumtemperatur liegen, in Form von mindestens einer Windung (31) vorliegen, in der Glykol gesteuert zirkuliert, wobei letzteres in mindestens einem Wärmetauscher gekühlt oder erhitzt wird.

17. Eine Vorrichtung gemäß Anspruch 16, **dadurch gekennzeichnet, dass** der Wärmetauscher für Glykol mit der Gefriereinheit (30) verbunden ist.

18. Eine Vorrichtung gemäß Anspruch 16 oder 17, **dadurch gekennzeichnet, dass** der Glykolkreislauf so angepasst ist, um eine geeignete Temperatur an die Windung oder die Windungen (31) zur Aufbewahrung von Eiscreme oder Ähnlichem zu liefern.

19. Eine Vorrichtung gemäß Anspruch 16 oder 17, **dadurch gekennzeichnet, dass** der Glykolkreislauf so angepasst ist, um eine geeignete Temperatur an die Windung oder die Windungen (31) zum Pasteurisieren oder Kochen der in dem Schlag- und Rührzylinder (12) befindlichen Mischung zu liefern.

20. Eine Vorrichtung gemäß Anspruch 16 oder 17, **dadurch gekennzeichnet, dass** der Glykolkreislauf so angepasst ist, um eine geeignete Temperatur an die Windung oder die Windungen (31) für die thermische Behandlung von essbarer Sahne zu liefern.

21. Eine Vorrichtung gemäß Anspruch 11, **dadurch gekennzeichnet, dass** die Mittel (18) zur thermischen Behandlung, die für die Bereitstellung von Temperaturen gedacht sind, die stärker von der Raumtemperatur abweichen, aus Mitteln bestehen zur gesteuerten Zufuhr von flüssigem Stickstoff oder anderen flüssigen inerten Gasen direkt in die unter Behandlung stehende Mischung.

## Revendications

1. Procédé de production et de vente au détail de façon impromptue de denrées alimentaires soumises à un traitement thermique et à un mélange ou une agitation, en particulier de la crème glacée italienne ou similaire, ayant plusieurs arômes exposés de façon visible au client, **caractérisé par** :
a) la production de plusieurs arômes de telles denrées alimentaires, en particulier de crème glacée ou similaire dans au moins autant d'unités de traitement (10a à 10f), chacune ayant un cylindre agitateur-doseur vertical (12) équipé de moyens d'agitation verticale (25) et de moyens de traitement thermique (18) ;
b) la conservation du produit obtenu dans les cylindres agitateurs-doseurs (12) correspondant à une température différente de celle de la température de congélation de dose ;
c) le retrait des arômes uniques selon la demande du client directement depuis l'entrée au niveau supérieur desdits cylindres agitateurs-doseurs verticaux (12).

2. Procédé selon la revendication 1, **caractérisé par** la pasteurisation ou la cuisson préventive du ou des mélanges, dans les mêmes cylindres agitateurs-doseurs (12).

3. Procédé selon la revendication 1 ou 2, **caractérisé par** la modification des conditions de refroidissement et/ou d'agitation afin de réguler la production.

4. Equipement servant à produire, exposer et vendre au détail des denrées alimentaires soumises à un traitement thermique et à un mélange ou une agitation, en particulier de la crème glacée italienne ou similaire, ayant plusieurs arômes uniques, **caractérisé en ce qu'**il est composé d'une pluralité de cylindres agitateurs-doseurs verticaux (12), chacun doté de moyens de traitement thermique (18) et de moyens d'agitation verticale (25), lesdits cylindres (12) étant adaptés pour y conserver le produit obtenu à une température différente de celle de la température de congélation de dose et étant disponible pour qu'un opérateur retire des portions de produit uniques, chaque cylindre agitateur-doseur vertical (12) a une entrée sensiblement au niveau du niveau supérieur de l'équipement d'exposition pour introduction dans le cylindre et retrait du produit.

5. Equipement selon la revendication 4, **caractérisé en ce que** chaque cylindre agitateur-doseur (12) comprend des moyens d'agitation (25) pouvant être activés et désactivés par une commande, ainsi que des moyens de refroidissement pouvant être commandés pour fournir au moins deux températures, respectivement pour le traitement thermique du produit et afin de conserver le produit.

6. Equipement selon la revendication 4 ou 5, **caractérisé en ce que** lesdits moyens d'agitation (25) sont composés de lames de dosage (25) ou similaires, montées de façon détachable dans le cylindre (12) correspondant.

7. Equipement selon la revendication 4, 5 ou 6, **caractérisé en ce qu'**au moins une portion de cylindre doseur comprend des moyens permettant de réaliser dans les mêmes cylindres une pasteurisation ou une cuisson préventive.

8. Equipement selon la revendication 1, **caractérisé en ce que** chaque cylindre agitateur-doseur (12) comporte un couvercle amovible (11).

9. Equipement selon une ou plusieurs des revendications 4 à 8, **caractérisé en ce qu'**il est composé de deux modules (10a à 10f) ou plus, chacun présentant un ou plusieurs cylindres agitateurs-doseurs (12) ayant en commun au moins une partie des moyens de traitement thermique (18) et/ou au moins une partie des moyens d'entraînement d'agitateur (14, 16).

10. Equipement selon au moins l'une des revendications 4 à 9, **caractérisé en ce que** chaque cylindre agitateur-doseur (12) a une capacité de 4 à 10 litres.

11. Equipement selon au moins l'une des revendications précédentes, **caractérisé en ce que** chaque cylindre agitateur-doseur (12) a des moyens de traitement thermique (18) séparés, respectivement destinés à fournir des températures plus éloignées ou plus proches de la température ambiante.

12. Equipement selon la revendication 11, **caractérisé en ce que** les moyens de traitement thermique (18) destinés à fournir des températures plus éloignées de la température ambiante sont composés d'un serpentin (18) qui peut être raccordé sous la commande d'une unité de fluide frigorigène (30).

13. Equipement selon la revendication 12, **caractérisé en ce que** ladite unité de fluide frigorigène (30) est adaptée pour fournir une température appropriée au(x) serpentin(s) (18) pour congeler par dose la crème glacée ou similaire.

14. Equipement selon la revendication 12, **caractérisé en ce que** ladite unité de fluide frigorigène (30) est adaptée pour fournir une température appropriée au(x) serpentin(s) (18) afin de pasteuriser ou de cuire le mélange dans le cylindre agitateur-doseur (12).

15. Equipement selon la revendication 12, **caractérisé en ce que** ladite unité de fluide frigorigène (30) est adaptée pour fournir une température appropriée au(x) serpentin(s) (18) pour un traitement thermique de crèmes comestibles.

16. Equipement selon la revendication 11, **caractérisé en ce que** lesdits moyens de traitement thermique (18) destinés à fournir des températures plus proches de la température ambiante sont sous la forme d'au moins un serpentin (31) dans lequel du glycol circule sous contrôle, ce dernier étant refroidi ou chauffé dans au moins un échangeur de chaleur.

17. Equipement selon la revendication 16, **caractérisé en ce que** ledit échangeur de chaleur au glycol est raccordé à l'unité de fluide frigorigène (30) susmentionnée.

18. Equipement selon la revendication 16 ou 17, **caractérisé en ce que** ledit circuit de glycol est adapté pour fournir une température appropriée au(x) serpentin(s) (31) afin de conserver la crème glacée ou similaire.

19. Equipement selon la revendication 16 ou 17, **caractérisé en ce que** ledit circuit de glycol est adapté pour fournir une température appropriée au(x) serpentin(s) (31) afin de pasteuriser ou cuire le mélange dans le cylindre agitateur-doseur (12).

20. Equipement selon la revendication 16 ou 17, **caractérisé en ce que** ledit circuit de glycol est adapté pour fournir une température appropriée au(x) serpentin(s) (31) pour un traitement thermique de crèmes comestibles.

21. Equipement selon la revendication 11, **caractérisé en ce que** les moyens de traitement thermique (18) destinés à fournir une température plus éloignée de la température ambiante sont composés de moyens d'admission régulée d'azote liquide, ou d'un autre gaz inerte liquide, directement dans le mélange en cours de traitement.
